Europäisches Patentamt

European Patent Office

Office européen des brevets

(11) Veröffentlichungsnummer: **0 097 219**
**B1**

# EUROPÄISCHE PATENTSCHRIFT

(45) Veröffentlichungstag der Patentschrift:
**10.12.86**

(21) Anmeldenummer: **83101689.4**

(22) Anmeldetag: **22.02.83**

(51) Int. Cl.⁴: **B 60 N 3/02**

(54) **Haltegriff od. dgl. für Fahrzeuge.**

(30) Priorität: **18.06.82 DE 3222810**

(43) Veröffentlichungstag der Anmeldung:
**04.01.84 Patentblatt 84/1**

(45) Bekanntmachung des Hinweises auf die Patenterteilung:
**10.12.86 Patentblatt 86/50**

(84) Benannte Vertragsstaaten:
**DE FR GB IT SE**

(56) Entgegenhaltungen:
**DE - A - 2 356 320**
**DE - A - 3 025 337**
**DE - C - 1 779 991**
**DE - C - 2 718 402**
**US - A - 4 266 318**

(73) Patentinhaber: **Gebr. Happich GmbH,**
**Postfach 10 02 49 Clausenbrücke 1,**
**D-5600 Wuppertal 1 (DE)**

(72) Erfinder: **Dietz, Günter, Eggenbruch 97,**
**D-5600 Wuppertal 1 (DE)**
Erfinder: **Flüshöh, Dieter, Brändströmstrasse 5,**
**D-5600 Wuppertal 2 (DE)**

## Beschreibung

Die Erfindung bezieht sich auf einen Haltegriff od. dgl. für Fahrzeuge, dessen Endbereiche jeweils eine Montageöffnung mit einer Bodenplatte, die zumindest mit einer Bohrung zum Durchführen einer Befestigungsschraube versehen ist, aufweisen, welche auf der der Griffauflagefläche abgewandten Seite durch eine einstückig mit dem Griff ausgebildete Abdeckkappe abdeckbar ist.

Die DE-C-1 779 991 beschreibt einen Haltegriff mit einer zugfesten, von einer Ummantelung umgebenen Einlage, deren Enden durch Schrauben od. dgl. befestigt sind. Die Schrauben sind durch einen Abdecklappen abdeckbar, der Teil der Ummantelung ist und der in der die Schrauben abdeckenden Lage randseitig von einem Rahmen gefasst ist. Der Abdecklappen sitzt einstückig an der das äussere Griffende bildenden stirnseitigen Abschlusswand und weist an seinem aus der Abschlusswand entspringenden Ende einen verjüngten Querschnitt auf, der durch eine querverlaufende Rille gebildet ist. Die Materialverjüngung stellt ein Filmscharnier dar, so dass der Abdecklappen aus einer offenen in eine abdeckende Lage verschwenkt werden kann. Obgleich sich dieser Griff in der Praxis recht gut bewährt hat, ist er nicht von Mängeln frei. So hat sich gezeigt, dass bei der Montage des Griffes oftmals Schwierigkeiten beim Einklipsen des Abdecklappens entstehen; denn die Klipshalterung, die aus einer am freien Ende des Abdecklappens vorgesehenen zahnartig vorstehenden Kante und einer zahnlückenartigen Rinne in dem den Abdecklappen aufnehmenden Rahmen besteht, liegt der querverlaufenden Rille gegenüber. Beim Einklipsen wirkt somit eine Kraftkomponente unmittelbar auf die Verbindungsstelle des Abdecklappens am äusseren Griffende, die aber durch die querverlaufende Rille ohnehin schon geschwächt ist und daher keine grossen Druckkräfte aufnehmen kann. Es kommt daher in der Praxis häufig vor, dass die Abdecklappen beim Einklipsen an der Rille abreissen, wodurch hohe Kosten durch eine Demontage des Griffes und Anbringen eines neuen Griffes entstehen.

Bei einem durch die DE-C-27 18 402 bekanntgewordenen Haltegriff, dessen Endbereiche jeweils eine Montageöffnung aufweisen, welche auf der der Griffauflagefläche abgewandten Seite durch eine in die Montageöffnung einklappbare Abdeckkappe abdeckbar ist, wobei die Abdeckkappe über ein Filmscharnier einstückig mit dem Griff ausgebildet und über mit dem Griff zusammenwirkende Rastelemente in ihrer abdeckenden Lage gehalten ist, wurde die Gefahr eines Abreissens der Abdeckkappe beim Aufklipsen wesentlich gemindert. Hierfür wurde vorgesehen, dass die Abdeckkappe einen U-förmigen Querschnitt und an ihren Seitenschenkeln angeordnete Rastelemente aufweist, wobei die Rastelemente als an den Aussenflächen der Seitenschenkel angeordnete kalottenförmige Nocken ausgebildet und in konkav ausgebildet Rastausnehmungen der die Montageöffnung begrenzenden Seitenwände einklipsbar sind. Durch diese bekannte Ausgestaltung wird zwar eine Belastung des Filmscharniers beim Klipsvorgang vermieden, jedoch kann es bei diesem bekannten Haltegriff dennoch zum Abreissen der Abdeckplatte kommen, und zwar schon beim Kopfaufschlagtest, der heute für Fahrzeuginnenausrüstungsteile aus Sicherheitsgründen vorgeschrieben ist. Bei einem Wegreissen des Filmscharniers ist aber ein fester Sitz der Abdeckkappe nicht mehr gewährleistet.

Bei dem vorgegebenen Stand der Technik ist es nunmehr Aufgabe der Erfindung, einen Haltegriff der eingangs erwähnten Art mit einer Abdeckappe an den Endbereichen auszubilden, wobei die Abdeckkappe vergleichbar einfach zu montieren und gegen ein ungewolltes Lösen gesichert sein soll, und zwar insbesondere auch dann, wenn es zu einem Abreissen der Anbindung zwischen den Endbereichen des Griffes und der Abdeckkappe kommen sollte.

Diese Aufgabe wird erfindungsgemäss dadurch gelöst, dass die Abdeckkappe mit zumindest einem Steckzapen ausgebildet und durch ein bandförmiges Verbindungsglied einstückig am Griff angeordnet ist, wobei der Steckzapfen für eine zumindest kraftschlüssige Halterung in der Montageöffnung deren Öffnungsquerschnitt angepasst ist, und wobei das Verbindungsglied eine ein etwa axiales Einführen des Steckzapfens in die Montageöffnung ermöglichende Länge aufweist.

Im Gegensatz zu den bekannten Vorbildern wird bei der Erfindung die Abdeckkappe nicht mehr über eine Klipsverbindung und über ein Filmscharnier am Griff gehalten, sondern vorteilhafterweise über einen zumindest kraftschlüssig in die Montageöffnung eingreifenden Steckzapfen. Damit ist die Abdeckkappe selbst dann zuverlässig am Griff gehaltert, wenn es zu einem Abreissen des Verbindungsgliedes, aus welchen Gründen auch immer, kommen sollte. Die Anbindung der Abdeckkappe an den Griff über ein relativ langes Verbindungsglied ermöglicht es, im Gegensatz zu einem lediglich eine Schwenkbewegung zulassenden Filmscharnier, die Abdeckkappe aus ihrer gestreckten Lage in Richtung des Griffes umzuklappen, anzuheben und mit dem Steckzapfen geradlinig in die Montageöffnung einzudrücken. Der Erfindungsgegenstand zeichnet sich insgesamt durch eine vergleichsweise einfache Herstellung und Montage, hohe Funktionssicherheit, Übereinstimmung von Griff und Abdeckkappen in bezug auf Gleichheit von Farbe und ggf. Narbung und im Vergleich zu Griffen mit separat gefertigten Abdeckkappen durch eine vereinfachte Lagerhaltung aus.

Weitere wesentliche Merkmale und vorteilhafte Ausgestaltungen der Erfindung sind in den Unteransprüchen angegeben.

Ein Ausführungsbeispiel der Erfindung wird nachfolgend anhand der Zeichnung näher erläutert und es zeigen

Fig. 1 eine Griffhälfte mit in Offenlage befindlicher Abdeckkappe,

Fig. 2 eine Draufsicht auf Fig. 1,

Fig. 3 eine Einzelheit X nach Fig. 1 in vergrössertem Massstab und

Fig. 4 einen Bereich der am Griff festgelegten Abdeckkappe im vergrösserten Massstab.

Der Griff besteht aus einem Grundkörper 1, dessen Endbereiche 2 jeweils zwei Montageöffnungen 3 aufweisen. Die Montageöffnungen 3 sind nach unten durch eine Bodenplatte 4, umfangsseitig durch Wandungen 5 und nach oben durch eine Abdeckkappe 6 verschlossen. Die Bodenplatte 4, die durch eine Einlage 7 verstärkt sein kann, weist mindestens einen Durchbruch 8 zur Durchführung einer Befestigungsschraube auf und bildet mit ihrer Aussenseite eine Griffauflagefläche 9.

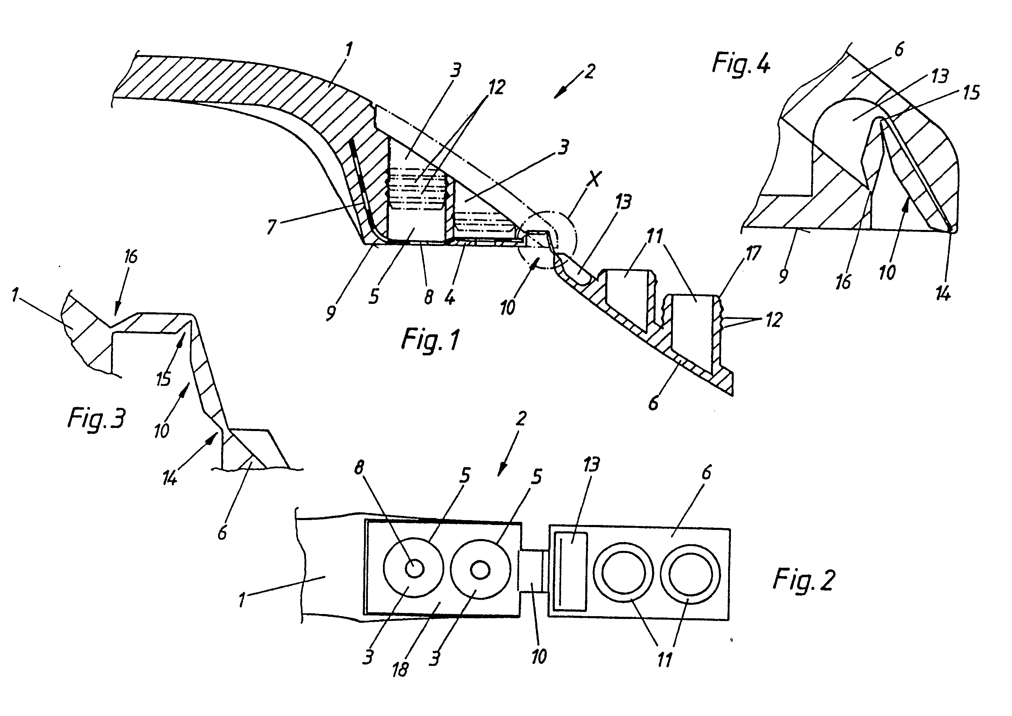

Die Abdeckkappe 6 ist über ein bandartiges Verbindungsglied 10 einstückig mit dem Endbereich 2 des Griffkörpers 1 ausgebildet. Die Abdeckkappe 6 weist zwei dem Öffnungsquerschnitt der Montageöffnungen 3 angepasste Steckzapfen 11 auf, die im montierten Zustand zumindest kraftschlüssig, vorzugsweise aber formschlüssig in den Montageöffnungen 3 gehaltert sind. Für die Herstellung einer formschlüssigen Verbindung sind die Steckzapfen 11 und/oder die Wandungen 5 der Montageöffnungen 3 mit einer sägezahnartigen Profilierung 12 versehen. Die Abdeckkappe 6 weist weiterhin noch eine Aufnahmekammer 13 auf, in die das Verbindungsglied 10 bei der Montage der Abdeckkappe 6 hineingleitet. Damit das Verbindungsglied 10 selbsttätig in die Aufnahmekammer 13 hineinzugleiten vermag, besitzt es eine spezielle Ausbildung mit drei das Verbindungsglied 10 querenden Sollknickstelle 14 bis 16. Dabei ist die erste Sollknickstelle 14 im Übergangsbereich von Verbindungsglied 10 zur Abdeckkappe 6 vorgesehen. Die zweite Sollknickstelle 15 befindet sich im mittleren Bereich des Verbindungsgliedes 10 und die letzte Sollknickstelle 16 schliesslich bildet den Übergang zum Grundkörper 1, wobei die Anbindung, wie insbesondere aus Fig. 4 ersichtlich, höhenversetzt zur Griffauflagefläche 9 vorgesehen ist. Sämtliche Sollknickstellen sind durch Kerben bzw. Materialschwächungen gebildet und verleihen dem Verbindungsglied 10 die Funktion eines Gelenkbandes.

Aufgrund der beschriebenen Konstruktion des Verbindungsgliedes 10 kann die Abdeckkappe 6 aus ihrer gestreckten Lage (vgl. Fig. 1 bis 3), welche zugleich ihre Herstellungslage in einer Spritzgussform ist, zum Grundkörper 1 geschwenkt und gleichzeitig von diesem abgehoben werden, so dass die Steckzapfen 11 koaxial über den Montageöffnungen 3 stehen und in diese eingedrückt werden können. Beim Eindrücken faltet sich dann das Verbindungsglied 10 etwa in der aus Fig. 4 ersichtlichen Weise innerhalb der hierfür vorgesehenen Aufnahmekammer 13. Das Eindrücken der Steckzapfen 11 kann durch an deren Enden vorgesehene Anfasungen 17 erleichtert werden.

Die montierte Abdeckkappe 6 stützt sich auf der Fläche 18, von der die Montageöffnungen 3 ausgehen, ab (vgl. auch Fig. 1), so dass es auch bei einem Kopfaufschlagtest nicht zu einem weiteren Eindringen der Steckzapfen 11 in die Montageöffnungen 3 als vorgesehen kommen kann. Vielmehr ist die Abdeckkappe 6, gleichgültig aus welcher Richtung auch immer sie belastet werden sollte, zuverlässig am Grundkörper 1 festgelegt, und zwar auch dann, wenn das Verbindungsglied 10 beim Montagevorgang an irgendeiner Sollbruchstelle bei z.B. unsachgemässer Behandlung reissen sollte.

## Patentansprüche

1. Haltegriff od. dgl. für Fahrzeuge, dessen Endbereiche (2) jeweils eine Montageöffnung (3) mit einer Bodenplatte (4), die zumindest mit einer Bohrung (8) zum Durchführen einer Befestigungsschraube versehen ist, aufweisen, welche auf der der Griffauflagefläche (9) abgewandten Seite durch eine einstückig mit dem Griff ausgebildete Abdeckkappe (6) abdeckbar ist, dadurch gekennzeichnet, dass die Abdeckkappe (6) zumindest mit einem Steckzapfen (11) ausgebildet und durch ein bandförmiges Verbindungsglied (10) einstückig am Griff angeordnet ist, wobei der Steckzapfen (11) für eine zumindest kraftschlüssige Halterung in der Montageöffnung (3) deren Öffnungsquerschnitt angepasst ist und wobei das Verbindungsglied (10) eine ein etwa axiales Einführen des Steckzapfens (11) in die Montageöffnung (3) ermöglichende Länge aufweist.

2. Haltegriff nach Anspruch 1, dadurch gekennzeichnet, dass die Griffenden und/oder die Abdeckkappen (6) jeweils eine nach aussen geschlossene Aufnahmekammer (13) für das Verbindungsglied (10) aufweisen.

3. Haltegriff nach Anspruch 1 oder 2, dadurch gekennzeichnet, dass beim Aufstecken der Abdeckkappe (6) das Verbindungsglied (10) durch quer verlaufend angeordnete Sollknickstellen (14, 15, 16) selbsttätig in die Aufnahmekammer (13) gleitet.

4. Haltegriff nach einem oder mehreren der Ansprüche 1 bis 3, dadurch gekennzeichnet, dass das Verbindungsglied (10) in bezug auf die Griffauflagefläche (9) höhenversetzt an dem Griffende angeformt ist.

5. Haltegriff nach einem oder mehreren der Ansprüche 1 bis 4, dadurch gekennzeichnet, dass das Verbindungsglied (10) drei Sollknickstellen (14, 15, 16) in Form von Materialverjüngungen bzw. Kerben aufweist.

6. Haltegriff nach einem oder mehreren der Ansprüche 1 bis 5, dadurch gekennzeichnet, dass die Abdeckkappen (6) jeweils zwei Steckzapfen (11) und die Griffenden (2) jeweils zwei Montageöffnungen (3) aufweisen.

7. Haltegriff nach einem oder mehreren der Ansprüche 1 bis 6, dadurch gekennzeichnet, dass die Steckzapfen (11) und/oder die Innenwandungen (5) der Montageöffnungen (3) eine radial umlaufende und in axialer Richtung verteilte Verzahnung (12) aufweisen.

8. Haltegriff nach einem oder mehreren der Ansprüche 1 bis 7, gekennzeichnet durch eine stirnseitige Anfasung (17) an den Stirnenden der Steckzapfen (11).

**Claims**

1. A grip handle or the like for a vehicle, in which for the purpose of assembling the handle each of its end portions (2) is provided with a socket (3) including a base plate (4) having at least one bore (8) for the passage of a fastening screw therethrough, and in which the socket's end remote from the handle's bearing surface (9) is arranged to be covered by a cap (6) formed integrally with the handle, characterized in that the cap (6) includes at least one plugin spigot (11) and is integrally joined to the handle by a strip-shaped link (10), that the spigot (11), for the purpose of at least frictionally holding it in the assembly socket (3), is shaped to match the latter's internal cross-section, and in that length of the link (10) is such as to permit the spigot's (11) insertion into the socket (3) in substantially axial direction.

2. A grip handle according to claim 1, characterized in that each of the handle's end portions and/or each cap (6) is provided with a compartment (13) which serves to accommodate the link (10) and which is closed against the exterior.

3. A grip handle according to claim 1 or claim 2, characterized in that the link (10) by virtue of transversely extending safety kinks (14, 15, 16) arranged therein automatically slides into the compartment (13) when the cap (66) is moved into its covering position.

4. A grip handle according to any one or more of the claims 1 to 3, characterized in that the link (10) is integrally joined to the respective end portion of the handle along a line which is offset in height from the bearing surface (9).

5. A grip handle according to any one or more of the claims 1 to 4, characterized in that the link (10) is provided with three safety kinks (14, 15, 16) each formed by a reduction in the thickness of the link's material or by notches.

6. A grip handle according to any one or more of the claims 1 to 5, characterized in that each cap (6) includes two plugin spigots (11) and each of the handle's end portions two assembly sockets (3).

7. A grip handle according to any one or more of the claims 1 to 6, characterized in that the spigots (11) and/or the internal walls (5) of the sockets (3) are provided with radially continuous axially spaced serrations (12).

8. A grip handle according to any one or more of the claims 1 to 7, characterized in that the front end of each spigot (11) is provided with a lead-in chamfer (17).

**Revendications**

1. Poignée de maintien ou analogue pour véhicules, dont les zones terminales (2) comportent chacune une ouverture de montage (3) pourvue d'une plaque de fond (4) qui comporte au moins un alésage (8) permettant de faire passer une vis de fixation qui peut être recouverte par un cache (6) formé d'un seul tenant avec la poignée du côté opposé à la surface d'appui (9) de la poignée caractérisée en ce que le cache (6) est réalisé avec un moins un têton d'emboîtement (11) et est solidarisé avec la poignée par un organe de liaison en forme de bande (10), le têton d'emboîtement (11) étant adapté, pour une fixation au moins à force dans l'ouverture de montage (3), à sa section droite, et l'organe de liaison (10) présentant une longueur permettant une introduction sensiblement axiale du têton d'emboîtement (11) dans l'ouverture de montage (3).

2. Poignée selon la revendication 1, caractérisée en ce que ses extrémités et/ou les caches (6) comportent chacun(e) une chambre de réception (13) pour l'organe de liaison (10) fermée vers l'extérieur.

3. Poignée selon la revendication 1 ou 2, caractérisée en ce que, lorsqu'on place le cache (6), l'organe de liaison (10) glisse automatiquement dans la chambre de réception (13) grâce à des emplacements d'inflexion portentielle (14, 15, 16) disposés transversalement.

4. Poignée selon une ou plusieurs des revendications 1 à 3, caractérisée en ce que l'organe de liaison (10) est formé sur l'extrémité de la poignée avec un décalage en hauteur par rapport à la surface d'appui (9) de la poignée.

5. Poignée selon une ou plusieurs des revendications 1 à 4, caractérisée en ce que l'organe de liaison (10) comporte trois zones d'inflexion potentielle (14, 15, 16) en forme d'affaiblissements de matière ou d'encoches.

6. Poignée selon une ou plusieurs des revendications 1 à 5, caractérisée en ce que les caches (6) comportent chacun deux têtons d'emboîtement (11), et en ce que les extrémités (2) de la poignée comportent chacune deux ouvertures de montage (3).

7. Poignée selon une ou plusieurs des revendications 1 à 6, caractérisée en ce que les têtons d'emboîtement (11) et/ou les parois intérieures (5) des ouvertuges de montage (3) comportent une denture (12) en faisant le tour de la circonférence et répartie en direction axiale.

8. Poignée selon une ou plusieurs des revendications 1 à 7, caractérisée par un biseautage frontal (17) aux extrémités frontales des têtons d'emboîtement (11).

Fig.4

Fig.1

Fig.2

Fig.3